# EUROPÄISCHE PATENTSCHRIFT

(11) **EP 2 258 012 B1**
(45) Veröffentlichungstag und Bekanntmachung des Hinweises auf die Patenterteilung: **16.04.2014**
(21) Anmeldenummer: 09721065.2
(22) Anmeldetag: 20.02.2009
(51) Int. Cl.: H01M 2/18, H01M 10/04

(54) **VERFAHREN ZUM UMRÜSTEN EINER SEPARATORBEARBEITUNGSMASCHINE**
METHOD FOR CONVERTING A SEPARATOR PROCESSING MACHINE
PROCÉDÉ DE RÉÉQUIPEMENT D'UNE MACHINE DE TRANSFORMATION DE SÉPARATEURS

(30) Priorität: 11.03.2008 DE 102008013687
(43) Veröffentlichungstag der Anmeldung: 08.12.2010
(73) Patentinhaber: Johnson Controls Autobatterie GmbH & Co. KGaA, 30419 Hannover (DE)
(72) Erfinder: JOHNS, Frank, 31157 Sarstedt (DE)
(74) Vertreter: Plöger, Jan Manfred
(86) Internationale Anmeldenummer: PCT/DE2009/000234
(87) Internationale Veröffentlichungsnummer: WO 2009/112006

(56) Entgegenhaltungen:
- EP-A- 1 176 657
- WO-A-92/02055
- DE-A1- 3 207 070
- JP-A- 2000 182 593
- US-A- 3 892 620
- US-A- 4 080 732
- US-A- 4 407 063
- US-A- 4 679 316
- US-A- 5 803 935

## Beschreibung

Die Erfindung betrifft ein Verfahren zum Umrüsten einer Separatorbearbeitungsmaschine zum Bearbeiten von bahnförmigen Separatoren für einen Blei-Akkumulator, mit den Schritten (a) Beenden einer Zufuhr eines ersten Separators mit einer Erstseparatorbreite zur Separatorbearbeitungsmaschine und (b) Zuführen eines zweiten Separators mit einer von der Erstseparatorbreite verschiedenen Zweitseparatorbreite zur Separatorbearbeitungsmaschine. Gemäß einem zweiten Aspekt betrifft die Erfindung einen Separatorsatz von bahnförmigen Separatoren zum Durchführen eines solchen Verfahrens, wobei die Separatoren ausgebildet sind zur Trennung gegenpoliger Elektroden eines Blei-Akkumulators und wobei jeder Separator des Separatorsatzes einen Folien-Grundkörper, der sich entlang einer Mittellinie erstreckt, und eine Mehrzahl an Hauptrippen besitzt, die sich entlang der Mittellinie um eine Hauptrippenhöhe über dem Foliengrundkörper erheben.

Separatorbearbeitungsmaschinen sind beispielsweise Taschmaschinen, die aus einem Separator in Form einer Bahn Separatortaschen herstellen. In die Separatortaschen sind im fertigen Blei-Akkumulator Polplatten eines Blei-Akkumulators aufgenommen. So werden die Polplatten einer Polarität von den Polplatten der anderen Polarität getrennt.

Separatorbearbeitungsmaschinen besitzen eine Leitvorrichtung, beispielsweise eine Führungswalze, um den zugeführten Separator zu führen. Die Führungswalze besitzt zum Führen des Separators Ausnehmungen, in die die Hauptrippen eingreifen.

Wenn ein Blei-Akkumulator mit Polplatten einer geringeren Breite hergestellt werden soll, so muss die Separatorbearbeitungsmaschine umgerüstet werden. Bisher muss dazu die Führungswalze ausgetauscht werden, was zeitaufwändig und teuer ist.

Der Erfindung liegt die Aufgabe zugrunde, ein Verfahren zum Umrüsten einer Separatorbearbeitungsmaschine und einen Satz an Separatoren vorzuschlagen, mit dem das Umrüsten der Separatorbearbeitungsmaschine auf einen anderen Separator schneller durchzuführen ist.

Aus der DE 10 2006 014 691 B3 sind ein Bleiakkumulator und ein Eintaschverfahren bekannt. Nachteilig an dem dort beschriebenen Verfahren ist die aufwändige Umrüstung der Separatorbearbeitungsmaschine bei einem Separatorwechsel. Den gleichen Nachteil haben Verfahren, die aus der DE 202 21 427 U1 und DE 692 09 230 T2 bekannt sind. Aus EP 1 176 657 A1 geht eine Vorrichtung zum Einführen von Batterie- und Akkumulatorplatten in Hüllen aus Separatormaterial hervor. Aus der US 4,407,063 geht ein Verfahren und eine Einrichtung zur Herstellung von Batterieplattenhüllen hervor.

Die Erfindung löst das Problem durch ein Verfahren gemäß ,Anspruch 1. Gemäß einem zweiten Aspekt löst die Erfindung das Problem durch einen Separatorsatz gemäß Anspruch 5.

Vorteilhaft an der Erfindung ist, dass sie ein schnelles Umrüsten der Separatorbearbeitungsmaschine ermöglicht. Es ist nämlich lediglich notwendig, den ersten Separator aus der Separatorbearbeitungsmaschine auszufädeln und den zweiten Separator in die unveränderte

Separatorbearbeitungsmaschine einzufädeln. Ein Wechsel der Leitvorrichtung ist entbehrlich. Hierdurch verringern sich die Stillstandszeiten beim Umrüsten der Separatorbearbeitungsmaschine drastisch. Vorteilhaft ist zudem, dass die Vorteile der Erfindung nicht mit Nachteilen erkauft werden müssen. So sind die Separatoren des erfindungsgemäßen Separatorsatzes hinsichtlich ihrer Funktionalität in einem Blei-Akkumulator bekannten Separatoren gleichwertig.

Im Rahmen der vorliegenden Beschreibung wird unter einer Separatorbearbeitungsmaschine insbesondere eine Taschmaschine verstanden, die aus einem Separator, der als Bahn vorliegen und daher auch als Separatorbahn bezeichnet werden kann, eine Separatortasche für eine Polplatte eines Blei-Akkumulators herstellt.

Unter einer Mittellinie des Separators wird insbesondere die gedachte Linie verstanden, die zwischen zwei seitlichen Rändern des Separators verläuft.

Das Merkmal, dass die Hauptrippen des zweiten Separators bezüglich der Mittellinie an den gleichen Stellen angeordnet sind wie die Hauptrippen des ersten Separators bedeutet damit insbesondere, dass die Hauptrippen des zweiten Separators in die gleichen Ausnehmungen einer Leitvorrichtung der Separatorbearbeitungsmaschine eingreifen können wie die Hauptrippen des ersten Separators.

Unter einem Separatorsatz wird insbesondere eine Gesamtheit von zwei, drei oder mehr Separatoren verstanden, die aufeinander bezogen die Merkmale von Anspruch 4 aufweisen. Der Separatorsatz kann daher auch als Kit an Separatoren bezeichnet werden.

Gemäß einer bevorzugten Ausführungsform bleibt die Leitvorrichtung beim Durchführen eines erfindungsgemäßen Verfahrens die gleiche. In anderen Worten wird die Leitvorrichtung nicht gewechselt, insbesondere nicht ausgebaut oder von einer aktiven Stellung in eine passive Stellung gebracht. Nach dem Umrüsten wird der Separator von der gleichen Leitvorrichtung geführt wie vor dem Umrüsten. Vorteilhaft hieran ist die beträchtliche Ersparnis an Arbeitszeit, da die Leitvorrichtung bzw. die Leitvorrichtungen in der Regel in einem Inneren der Separatorbearbeitungsmaschine angeordnet sind, so dass sie schwer zugänglich sind. Ein aufwändiges Wechseln oder Umrüsten der Leitvorrichtung ist damit entbehrlich.

Besonders bevorzugt bleibt während des Durchführens eines erfindungsgemäßen Verfahrens die Lage der mindestens einen Leitvorrichtung relativ zu einem Separatorpfad des Separators durch die Separatorbearbeitungsmaschine unverändert. In anderen Worten muss die Leitvorrichtung beim Umrüsten der Separatorbearbeitungsmaschine nicht betätigt und/oder verändert werden, was Zeit und Kosten spart.

Die Separatoren eines erfindungsgemäßen Separatorsatzes besitzen bevorzugt eine Mehrzahl an Nebenrippen, die sich entlang der Mittellinie um eine Nebenrippenhöhe über den Foliengrundkörper erheben, die kleiner ist als die Hauptrippenhöhe, und zwischen benachbarten Hauptrippen angeordnet sind, und eine Mehrzahl an Minirippen, die sich entlang der Längsachse um eine Minirippenhöhe über den Foliengrundkörper erheben, die kleiner ist als die Nebenrippenhöhe, und randseitig jenseits der Haupt- und Nebenrippen angeordnet sind. Das Vorsehen von Neben- und Minirippen führt zu einem besonders verlässlichen Separator. Vorteilhafterweise ist in diesem Fall die Leitvorrichtung der Separatorbeschichtungsmaschine ausgebildet, um lediglich mit den Hauptrippen zusammen zu wirken. Das heißt, dass die Hauptrippe in die Ausnehmung eingreifen kann, wohingegen für die Neben- und Minirippen keine Ausnehmungen in der Leitvorrichtung vorhanden sind.

Bevorzugt besitzt jeder Separator eine Zentral-Hauptrippe, die in der Mittellinie angeordnet ist. Das heißt, dass die Zentral-Hauptrippe zentrisch zwischen zwei Außenrändern des Separators angeordnet ist.

Bevorzugt ist bei jedem Separator ein Hauptrippenabstand zwischen benachbarten Hauptrippen kleiner als 23 mm. So wird erreicht, dass eine Vielzahl unterschiedlicher Separatortaschenbreiten herstellbar ist. In anderen Worten lassen sich so Blei-Akkumulatoren mit einer Vielzahl von Polplattenbreiten herstellen.

Ein besonders leichter, materialsparender und kostengünstiger Separatorsatz wird erhalten, wenn jeder Separator weniger als 13, insbesondere weniger als 11 Hauptrippen aufweist. Es hat sich herausgestellt, dass mehr Hauptrippen die elektrischen Eigenschaften eines mit dem Separator hergestellten Blei-Akkumulators negativ beeinflussen. Es ist bevorzugt, dass bei jedem Separator zwischen zwei Hauptrippen jeweils mindestens zwei Nebenrippen angeordnet sind.

Die Hauptrippenhöhe beträgt bevorzugt mehr als 600 µm und/oder weniger als 1500 µm. Die Nebenrippenhöhe beträgt bevorzugt mehr als 450 µm und/oder weniger als 600 µm. Die Rippenhöhe beträgt mehr als zwischen 200 µm und/oder weniger als 300 µm.

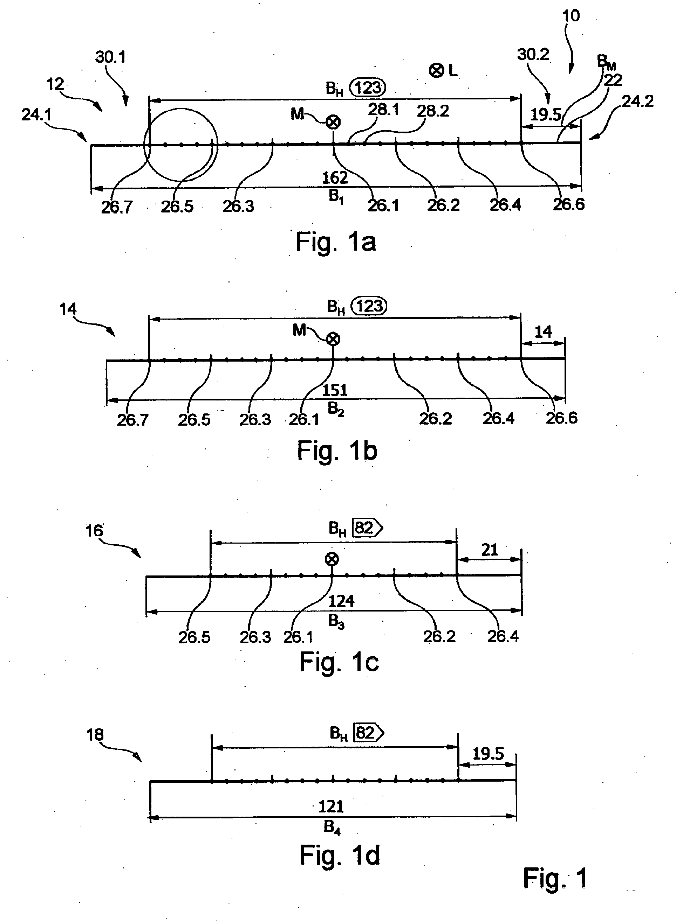

Im Folgenden werden Ausführungsformen der Erfindung anhand der beigefügten Zeichnungen näher erläutert. Dabei zeigt Figur 1 einen erfindungsgemäßen Separatorsatz in seinen Teilfiguren. Figur 1 zeigt
- Figur 1a: einen Querschnitt durch einen ersten Separator zur Verwendung in einem erfindungsgemäßen Verfahren,
- Figur 1b: einen Querschnitt durch einen zweiten Separator zur Verwendung in einem erfindungsgemäßen Verfahren,
- Figur 1c: einen Querschnitt durch einen dritten Separator zur Verwendung in einem erfindungsgemäßen Verfahren und
- Figur 1d: einen Querschnitt durch einen vierten Separator zur Verwendung in einem erfindungsgemäßen Verfahren,
- Figur 2: zeigt einen vergrößerten Ausschnitt des Separators gemäß Figur 1a.
- Fig. 3: zeigt eine Leitvorrichtung.

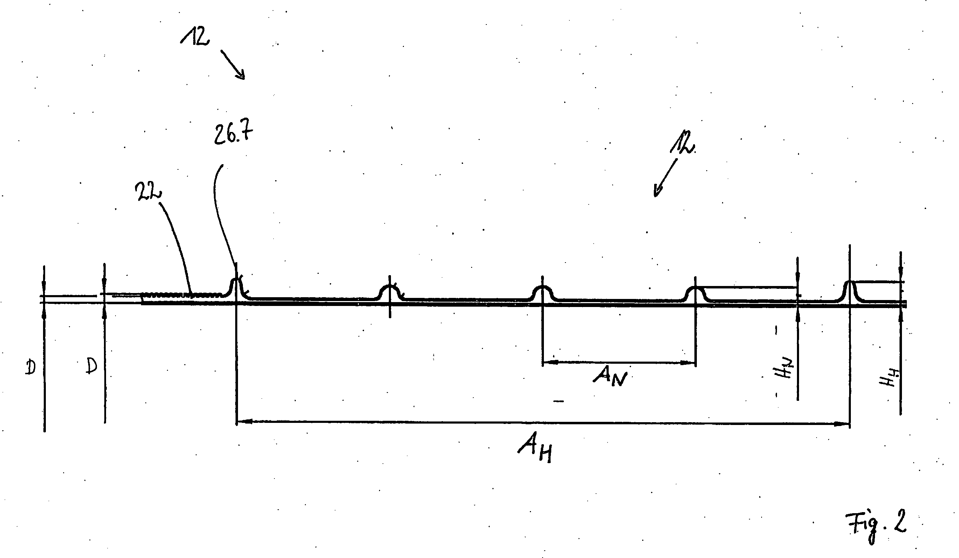

Figur 1 zeigt einen Separatorsatz 10, der einen ersten Separator 12, einen zweiten Separator 14, einen dritten Separator 16 und einen vierten Separator 18 umfasst. Der erste Separator 12 hat einen Foliengrundkörper 22, der sich entlang einer Längsachse L erstreckt, die senkrecht zur Zeichnungsebene verläuft. Mittig zwischen einem ersten Rand 24.1 und einem zweiten Rand 24.2 verläuft parallel zur Längsachse L eine Mittellinie M. In der Mittellinie M, die in Figur 1a aus Gründen der Übersichtlichkeit oberhalb ihrer eigentlichen Position durch den Foliengrundkörper 22 gezeichnet ist, verläuft eine erste oder Zentral-Hauptrille 26.1, die sich um eine Hauptrippenhöhe H_{H} (vgl. Figur 2) über den Foliengrundkörper 22 erhebt.

Spiegelsymmetrisch zur Mittellinie M sind in einem Hauptrippenabstand A_{H} (vgl. Figur 2) Hauptrippen 26.2, ..., 26.7 angeordnet. Das heißt in anderen Worten, dass der Abstand beispielsweise der zweiten Hauptrippe 26.2 von der Zentral-Hauptrippe 26.1 genauso groß ist wie der Abstand zwischen der dritten Hauptrippe 26.3 und der Zentral-Hauptrippe 26.1.

Zwischen benachbarten Hauptrippen, beispielsweise zwischen den Hauptrippen 26.1 und 26.2, ist eine Mehrzahl von Nebenrippen 28.1, 28.2, ... angeordnet. Die Nebenrippen 28 erheben sich um eine Nebenrippenhöhe H_{N} von 600 µm (vgl. Figur 2) über den Foliengrundkörper 22.

Beidseits der beiden zuäußerst liegenden Hauptrippen 26.6 bzw. 26.7 erhebt sich eine Vielzahl von Minirippen 30.1 bzw. 30.2 mit einer Minirippenhöhe H_{M} von 200 µm (vgl. Figur 2) über den Foliengrundkörper 22. Die Minirippen 30 erstrecken sich randseits in einer Breite B_{M} von insgesamt 19,5 mm. Zwischen den beiden äußersten Hauptrippen 26.6, 26.7 erstreckt sich eine Hauptrippenzone, in der lediglich Haupt- und Nebenrippen vorhanden sind und die eine Hauptrippenzonenbreite B_{H} von 123 mm hat. Insgesamt hat der erste Separator 12 eine Erstseparatorbreite B₁ von 162 mm.

Figur 1b zeigt den zweiten Separator 14, der Haupt- und Nebenrippen 26 bzw. 28 besitzt, die an den gleichen Stellen bezüglich der Mittellinie M angeordnet sind, wie im ersten Separator 12. Bezugszeichen ohne Zählersuffix bezeichnen dabei das jeweilige Objekt als solches. Der zweite Separator 14 unterscheidet sich vom ersten Separator 12 dadurch, dass die Minirippenzonenbreite B_{M} mit 14 mm kleiner ist.

Figur 1c zeigt den dritten Separator 16, der anders als der erste und der zweite Separator 12 bzw. 14 nicht sieben, sondern lediglich fünf Hauptrippen 26.1, ..., 26.5 aufweist. Dadurch beträgt die Hauptrippenzonenbreite B_{H} lediglich 82 cm. Die Minirippenzonenbreite B_{M} beträgt 21 mm, woraus sich eine Drittseparatorbreite B₃ von 124 mm ergibt. Die fünf Hauptrippen 26.1 bis 26.5 sind bezüglich der Mittellinie M an den gleichen Stellen angeordnet wie die Hauptrippen 26.1 bis 26.5 des ersten Separators 12 und des zweiten Separators 14.

Figur 1d zeigt den vierten Separator 18 des Separatorsatzes 10. Dieser unterscheidet sich vom dritten Separator 16 durch eine geringere Minirippenzonenbreite B_{M}.

Figur 2 zeigt einen Ausschnitt des ersten Separators 12 und die zugehörige Bemaßung. Es ist zu erkennen, dass der Foliengrundkörper 22 eine Foliendicke D von randseitig 220 µm bis 300 µm benachbart zur nächstliegenden Hauptrippe 26.7 aufweist. Ein Hauptrippenabstand A_{H} ist kleiner als 23 mm und beträgt beispielsweise 20 mm. Ein Nebenrippenabstand benachbarter Nebenrippen liegt unter 10 mm und beträgt beispielsweise 5 mm.

Der erste Separator 12 wird zum Herstellen einer Separatortasche im Rahmen eines Herstellungsverfahrens für einen Blei-Akkumulator in eine erfindungsgemäße Separatorbearbeitungsmaschine in Form einer Taschmaschine eingefädelt. In der Taschmaschine wird eine Polplatte auf die Hauptrippen aufgelegt. Anschließend wird der erste Separator 12 in einer Ebene parallel zur Papierebene gemäß Figur 1a gefaltet und im Bereich der Minirippen 30 gerändelt. Dadurch ergibt sich eine säuredichte Separatortasche, die die Polplatte an drei Seiten umgibt.

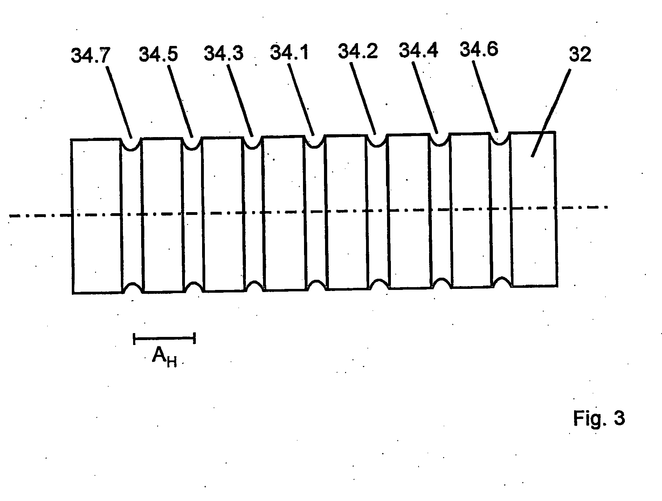

Damit dieser Prozess sicher durchgeführt werden kann, umfasst die Separatorbarbeitungsmaschine eine in Figur 3 schematisch gezeigte Leitvorrichtung 32 in Form einer Führungswalze. Die Führungswalze 32 besitzt Ausnehmungen 34.1, ..., 34.7 in Form umlaufender Nuten. Die Ausnehmungen 34 sind voneinander um den Hauptrippenabstand beabstandet, dass die Hauptrippen 26 in sie eingreifen können. Mit der Führungswalze 32 wird beispielsweise der erste Separator durch die Separatorbearbeitungsmaschine befördert.

Um auf den zweiten Separator zu wechseln, muss lediglich der erste Separator 12 aus der Separatorbearbeitungsmaschine ausgefädelt und der zweite Separator 14 eingefädelt werden. Die Hauptrippen des zweiten Separators sind bezüglich der Mittelinie M (vgl. Figur 1b) so angeordnet wie beim ersten Separator (vgl. Figur 1a). Gleichzeitig sind die Hauptrippen 26 in allen Separatoren symmetrisch bezüglich der Mittellinie M. Dadurch kommt die Zentral-Hauptrippe 26 stets in der Ausnehmung 34.1 zum Eingriff. Wird ein Separator verwendet, der weniger Hauptrippen besitzt als der erste Separator 12, beispielsweise der dritte Separator 16, so kann dennoch die Führungswalze 32 weiterverwendet werden, da in diesem Fall lediglich die beiden äußersten Ausnehmungen 34.6 und 34.7 ins Leere greifen.

### Bezugszeichenliste

- 10: Separatorsatz
- 12: erster Separator
- 14: zweiter Separator
- 16: dritter Separator
- 18: vierter Separator
- 20: Foliengrundkörper
- 24: Rand
- 26: Zentral-Hauptrippe
- 28: Nebenrippe
- 30: Minirippen
- 32: Führungswalze
- 34: Ausnehmung

- L: Längsachse
- D: Foliendicke
- M: Mittellinie
- H_{H}: Hauptrippenhöhe
- H_{N}: Nebenrippenhöhe
- H_{M}: Minirippenhöhe
- A_{H}: Hauptrippenabstand
- B_{H}: Hauptrippenzonenbreite
- B_{M}: Minirippenzonenbreite
- B₁: Erstseparatorbreite
- B₂: Zweitseparatorbreite
- B₃: Drittseparatorbreite

## Patentansprüche

1. Verfahren zum Umrüsten einer Separatorbearbeitungsmaschine zum Bearbeiten von Separatoren für einen Blei-Akkumulator, mit den Schritten:
(a) Beenden einer Zufuhr eines ersten Separators mit einer Erstseparatorbreite zur Separatorbearbeitungsmaschine und
(b) Zuführen eines zweiten Separators mit einer von der Erstseparatorbreite verschiedenen Zweitseparatorbreite zur Separatorbearbeitungsmaschine,
**dadurch gekennzeichnet, dass**
(c) die Separatoren
(i) einen sich entlang einer Mittellinie erstreckenden Foliengrundkörper und
(ii) eine Mehrzahl an Hauptrippen, die
- sich entlang der Mittellinie um eine Hauptrippenhöhe über den Foliengrundkörper erheben und
- spiegelsymmetrisch bezüglich der Mittellinie angeordnet sind,
umfassen,
(iii) wobei die Hauptrippen des zweiten Separators bezüglich der Mittellinie an den gleichen Stellen angeordnet sind wie die Hauptrippen des ersten Separators.

2. Verfahren nach Anspruch 1, **dadurch gekennzeichnet, dass** die Separatorbearbeitungsmaschine eine Leitvorrichtung zum Leiten des Separators umfasst, die beim Durchführen des Verfahrens ungewechselt bleibt.

3. Verfahren nach Anspruch 2, **dadurch gekennzeichnet, dass** die Leitvorrichtung beim Durchführen des Verfahrens in ihrer Lage relativ zu einem Separatorpfad des Separators durch die Separatorbearbeitungsmaschine unverändert bleibt.

4. Verfahren nach einem der vorstehenden Ansprüche, **dadurch gekennzeichnet, dass** der erste Separator und der zweite Separator aus einem Separatorsatz nach einem der Ansprüche 5 bis 11 ausgewählt werden.

5. Separatorsatz von Separatoren zum Durchführen eines Verfahrens nach einem der vorstehenden Ansprüche,
(a) wobei die Separatoren ausgebildet sind zur Trennung gegenpoliger Elektroden eines Blei-Akkumulators, und
(b) wobei jeder Separator des Separatorsatzes
(i) einen Foliengrundkörper, der sich entlang einer Mittellinie erstreckt, und
(ii) eine Mehrzahl an Hauptrippen, die sich entlang der Mittellinie um eine Hauptrippenhöhe über den Foliengrundkörper erheben,
besitzt,
**dadurch gekennzeichnet, dass**
(c) die Hauptrippen aller Separatoren spiegelsymmetrisch bezüglich der Mittellinie angeordnet sind und
(d) wobei die Hauptrippen eines Separators bezüglich der Mittellinie an den gleichen Stellen angeordnet sind wie die Hauptrippen eines anderen Separators.

6. Separatorsatz nach Anspruch 5, **dadurch gekennzeichnet, dass** alle Separatoren
(a) eine Mehrzahl an Nebenrippen, die
(i) sich entlang der Mittellinie um eine Nebenrippenhöhe über den Foliengrundkörper erheben, die kleiner ist als die Hauptrippenhöhe, und
(ii) zwischen benachbarten Hauptrippen angeordnet sind, und
(b) eine Mehrzahl an Minirippen, die
(i) sich entlang der Mittellinie um eine Minirippenhöhe über den Foliengrundkörper erheben, die kleiner ist als die Nebenrippenhöhe, und
(ii) randseitig jenseits der Haupt- und Nebenrippen angeordnet sind,
aufweisen.

7. Separatorsatz nach einem der Ansprüche 5 bis 6, dadurch gekennzelchnet, dass bei jedem Separator in der Mittellinie eine Zentral-Hauptrippe angeordnet ist.

8. Separatorsatz nach einem der Ansprüche 5 bis 7, **dadurch gekennzeichnet, dass** bei jedem Separator ein Hauptrippenabstand zwischen benachbarten Hauptrippen kleiner ist als 23 mm.

9. Separatorsatz nach einem der Ansprüche 5 bis 7, **dadurch gekennzeichnet, dass** bei jedem Separator weniger als 13 Hauptrippen, insbesondere weniger als 11 Hauptrippen, vorhanden sind, wobei jeder Separator insbesondere mehr als 4 Hauptrippen umfasst.

10. Separatorsatz nach einem der Ansprüche 6 bis 9, **dadurch gekennzeichnet, dass** bei jedem Separator zwischen zwei Hauptrippen jeweils mindestens zwei Nebenrippen angeordnet sind.

11. Separatorsatz nach einem der Ansprüche 6 bis 10, **dadurch gekennzeichnet, dass** bei jedem Separator benachbart zu den Minirippen eine Hauptrippe angeordnet ist.

12. Separatorbearbeitungsmaschine zum Bearbeiten von Separatoren des Separatorsatzes nach einem der Ansprüche 5 bis 11, mit einer Leitvorrichtung zum Leiten jedes der Separatoren, die Ausnehmungen in Form umlaufender Nuten zum Eingriff durch zumindest eine der Hauptrippen aufweist.

13. Separatorbearbeitungsmaschine nach Anspruch 12, **dadurch gekennzeichnet, dass** sie ausgebildet ist zum Herstellen einer Separatortasche aus dem Separator, wobei die Leitvorrichtung eine Führungswalze ist.

## Claims

1. A method for converting a separator processing machine for the processing of separators for a lead-acid rechargeable battery, having the following steps:
(a) ending of a supply of a first separator with a first separator width to the separator processing machine and
(b) supplying a second separator with a second separator width, which is different from the first separator width, to the separator processing machine,
**characterized in that**
(c) the separators comprise
(i) a film base body which extends along a center line and
(ii) a plurality of main ribs which
- project above the film base body by a main rib height along the center line, and
- are arranged with mirror-image symmetry with respect to the center line,
(iii) wherein the main ribs of the second separator are arranged at the same points with respect to the center line as the main ribs of the first separator.

2. The method as claimed in claim 1, **characterized in that** the separator processing machine comprises a guide apparatus for guiding the separator, which guide apparatus remains unchanged when carrying out the method.

3. The method as claimed in claim 2, **characterized in that** the guide apparatus remains unchanged in its position relative to a separator path of the separator through the separator processing machine when carrying out the method.

4. The method as claimed in one of the preceding claims, **characterized in that** the first separator and the second separator are selected from a separator set as claimed in one of claims 5 to 11.

5. A separator set of separators for carrying out a method as claimed in one of the preceding claims,
(a) wherein the separators are designed for separating opposite-polarity electrodes in a lead-acid rechargeable battery and
(b) wherein each separator in the separator set has
(i) a film base body which extends along a center line, and
(ii) a plurality of main ribs which project above the film base body by a main rib height along the center line,
**characterized in that**
(c) the main ribs of all the separators are arranged with mirror-image symmetry with respect to the center line, and
(d) wherein the main ribs of the separator are arranged at the same points with respect to the center line as the main ribs of another separator.

6. The separator set as claimed in claim 5, **characterized in that** all the separators have
(a) a plurality of secondary ribs which
(i) project above the film base body by a secondary rib height along the center line, which secondary rib height is less than the main rib height, and
(ii) are arranged between adjacent main ribs, and
(b) a plurality of miniribs which
(i) project above the film base body by a minirib height along the center line, which minirib height is less than the secondary rib height, and
(ii) are arranged at the edge beyond the main ribs and secondary ribs.

7. The separator set as claimed in one of claims 5 or 6, **characterized in that** a central main rib is arranged on the center line for each separator.

8. The separator set as claimed in one of claims 5 to 7, **characterized in that** a main rib separation between adjacent main ribs for each separator is less than 23 mm.

9. The separator set as claimed in one of claims 5 to 7, **characterized in that** there are less than 13 main ribs, in particular less than 11 main ribs, for each separator, wherein each separator comprises more than 4 main ribs.

10. The separator set as claimed in one of claims 6 to 9, **characterized in that** at least two secondary ribs are in each case arranged between two main ribs for each separator.

11. The separator set as claimed in one of claims 6 to 10, **characterized in that** one main rib is arranged adjacent to the miniribs for each separator.

12. The separator processing machine for the processing of separators in the separator set as claimed in one of the claims 5 to 11, having a guide apparatus for guiding each of the separators, which guide apparatus has recesses in the form of circumferential slots for at least one of the main ribs to engage in.

13. The separator processing machine as claimed in claim 12, **characterized in that** the separator processing machine is designed for producing a separator pocket from the separator, wherein the guide apparatus is a guide roller.

## Revendications

1. Procédé de rééquipement d'une machine de traitement de séparateurs pour traiter des séparateurs d'un accumulateur au plomb, comprenant les étapes suivantes :
(a) achèvement de l'acheminement d'un premier séparateur ayant une largeur de premier séparateur à la machine de traitement de séparateurs et
(b) acheminement, à la machine de traitement de séparateurs, d'un deuxième séparateur ayant une largeur de deuxième séparateur différente de la largeur de premier séparateur, **caractérisé en ce que**
(c) les séparateurs comprennent
(i) un corps de base en feuille s'étendant le long d'un axe médian et
(ii) une pluralité de nervures principales qui
- s'élèvent le long de l'axe médian au-dessus du corps de base en feuille d'une hauteur de nervure principale et
- sont disposées avec une symétrie miroir par rapport à l'axe médian,
(iii) les nervures principales du deuxième séparateur étant disposées, par rapport à l'axe médian, aux mêmes emplacements que les nervures principales du premier séparateur.

2. Procédé selon la revendication 1, **caractérisé en ce que** la machine de traitement de séparateurs comprend un dispositif conducteur pour conduire le séparateur, lequel dispositif conducteur reste inchangé lors de la mise en oeuvre du procédé.

3. Procédé selon la revendication 2, **caractérisé en ce que** la position du dispositif conducteur, lors de la mise en oeuvre du procédé, reste inchangée par rapport à un chemin de séparateur du séparateur à travers la machine de traitement de séparateurs.

4. Procédé selon l'une quelconque des revendications précédentes, **caractérisé en ce que** le premier séparateur et le deuxième séparateur sont choisis parmi un ensemble de séparateurs selon l'une quelconque des revendications 5 à 11.

5. Ensemble de séparateurs pour mettre en oeuvre un procédé selon l'une quelconque des revendications précédentes,
(a) les séparateurs étant réalisés pour séparer des électrodes de polarité inverse d'un accumulateur au plomb, et
(b) chaque séparateur de l'ensemble de séparateurs possédant
(i) un corps de base en feuille qui s'étend le long d'un axe médian, et
(ii) une pluralité de nervures principales qui s'élèvent le long de l'axe médian au-dessus du corps de base en feuille d'une hauteur de nervure principale,
**caractérisé en ce que**
(c) les nervures principales de tous les séparateurs sont disposées avec une symétrie miroir par rapport à l'axe médian et
(d) les nervures principales d'un séparateur étant disposées, par rapport à l'axe médian, aux mêmes emplacements que les nervures principales d'un autre séparateur.

6. Ensemble de séparateurs selon la revendication 5, **caractérisé en ce que** tous les séparateurs présentent
(a) une pluralité de nervures secondaires, qui
(i) s'élèvent le long de l'axe médian au-dessus du corps de base en feuille d'une hauteur de nervure secondaire qui est inférieure à la hauteur de nervure principale, et
(ii) sont disposées entre des nervures principales adjacentes, et
(b) une pluralité de mini-nervures, qui
(i) s'élèvent le long de l'axe médian au-dessus du corps de base en feuille d'une hauteur de mini-nervure qui est inférieure à la hauteur de nervure secondaire, et
(ii) sont disposées du côté du bord au-delà des nervures principales et secondaires.

7. Ensemble de séparateurs selon l'une quelconque des revendications 5 à 6, **caractérisé en ce qu'**une nervure principale centrale est disposée dans l'axe médian de chaque séparateur.

8. Ensemble de séparateurs selon l'une quelconque des revendications 5 à 7, **caractérisé en ce que** pour chaque séparateur, une distance de nervure principale entre des nervures principales adjacentes est inférieure à 23 mm.

9. Ensemble de séparateurs selon l'une quelconque des revendications 5 à 7, **caractérisé en ce que** pour chaque séparateur, moins de 13 nervures principales, notamment moins de 11 nervures principales, sont prévues, chaque séparateur comprenant notamment plus de 4 nervures principales.

10. Ensemble de séparateurs selon l'une quelconque des revendications 6 à 9, **caractérisé en ce que** pour chaque séparateur, à chaque fois au moins deux nervures secondaires sont disposées entre deux nervures principales.

11. Ensemble de séparateurs selon l'une quelconque des revendications 6 à 10, **caractérisé en ce que** pour chaque séparateur, une nervure principale est disposée à côté des mininervures.

12. Machine de traitement de séparateurs pour traiter des séparateurs de l'ensemble de séparateurs selon l'une quelconque des revendications 5 à 11, comprenant un dispositif conducteur pour conduire chacun des séparateurs, lequel dispositif conducteur présente des évidements sous forme de rainures périphériques dans lesquelles doit s'engager au moins l'une des nervures principales.

13. Machine de traitement de séparateurs selon la revendication 12, **caractérisée en ce qu'**elle est réalisée de manière à fabriquer une poche de séparateur à partir du séparateur, le dispositif conducteur étant un cylindre de guidage.
